# FASCICULE DE BREVET EUROPEEN

(11) **EP 0 839 706 B1**
(45) Date de publication et mention de la délivrance du brevet: **02.01.2002**
(21) Numéro de dépôt: 97420200.4
(22) Date de dépôt: 29.10.1997
(51) Int. Cl.: B62K 9/00, B62H 5/06

(54) **Système de direction et jouet pour enfant comprenant un tel système de direction**
Lenksystem und Kinderspielzeug mit einem solchen Lenksystem
Steering system and child's toy comprising such a steering system

(30) Priorité: 31.10.1996 FR 9613552
(43) Date de publication de la demande: 06.05.1998
(73) Titulaire: Groupe Berchet, 01100 Oyonnax (FR)
(72) Inventeur: Jeunet, Christian, 39150 Saint-Laurent-En-Grandvaux (FR); Prost Petit Jean, Philippe, 39130 Bonlieu (FR); Pauly, Gilbert, 39130 Blye (FR)
(74) Mandataire: Myon, Gérard Jean-Pierre

(56) Documents cités:
- CH-A- 314 538
- GB-A- 145 370
- US-A- 2 415 735
- US-A- 4 138 131
- US-A- 4 674 761
- US-A- 4 714 261

## Description

L'invention a trait à un système de direction de jouet pour enfant et à un jouet tel qu'un tricycle, un tracteur, une voiture à pédales ou un porteur incorporant un tel système de direction.

Il est connu de munir les jouets pour enfant d'un système de direction permettant à l'utilisateur de déterminer sa trajectoire. Par ailleurs, on sait qu'il est parfois nécessaire de pousser le jouet et l'enfant, en particulier lorsque ce dernier est fatigué ou trop petit pour pédaler et se diriger. Il est connu d'équiper par exemple un tricycle avec une canne dirigée vers l'arrière, permettant à un adulte de pousser le tricycle sans être courbé de façon pénible. Cependant, dans ce cas, il arrive que l'enfant ne soit pas en mesure de piloter le tricycle selon les directives de l'adulte qui le pousse, et manoeuvre le système de direction d'une façon telle que le tricycle va dans une direction non souhaitée. Ceci peut entraîner un choc susceptible de blesser l'enfant et peut s'avérer pénible pour l'adulte. Ainsi, si l'enfant manoeuvre le système de direction pour tourner à droite alors que l'adulte désirait tourner à gauche, celui-ci exerce sur la canne un effort générant le virage vers la gauche du tricycle, de sorte que la fausse manoeuvre réalisée par l'enfant est susceptible de faire basculer l'ensemble du jouet et que l'enfant peut passer par dessus le système de direction, ce qui peut être dangereux.

De plus, il est parfois nécessaire de procéder au rangement des jouets laissés par des enfants sur une aire de jeux. Dans ce cas, lorsqu'un adulte pousse par l'arrière un jouet, qu'il s'agisse d'un tricycle, d'une voiture, d'un porteur ou d'un tracteur, aucun effort n'est exercé sur le système de direction et celle-ci est "folle" de sorte que, en particulier si le jouet est déplacé avec une vitesse conséquente, la ou les roues directrices peuvent, en fonction des irrégularités du terrain sur lequel est déplacé le jouet, se mettre en travers, de sorte que le jouet prend une trajectoire non souhaitée.

En outre, dans le cas d'un porteur ou pousseur, il est connu qu'un jeune enfant apprend à marcher en s'appuyant sur le jouet qui, s'il est muni d'une direction, peut tourner tout seul et entraîner l'enfant vers un lieu non désiré.

US-A-4,138,131 divulgue un système de direction pour une planche à roues dans lequel un utilisateur peut exercer, par son poids, un effort de déblocage de la tige de direction. Un effort permanent doit être exercé pour pouvoir diriger la planche.

CH-A-314 538 divulgue un système de blocage d'une roue avant de bicyclette au moyen d'un étrier pouvant être amené autour d'un tube du cadre de la bicyclette. Cet étrier peut rayer le tube et le jeu nécessaire aux mouvements de l'étrier induit un blocage imprécis de la roue.

Pour les raisons qui précèdent, les dispositifs connus ne donnent pas entièrement satisfaction.

L'invention vise à résoudre ces problèmes et à proposer un système de direction permettant à un enfant utilisant le jouet de piloter normalement celui-ci et à un adulte ou un jeune enfant de guider effectivement le jouet lorsqu'il est nécessaire de le pousser par l'arrière.

Dans cet esprit, l'invention concerne un système de direction de jouet pour enfant comprenant un organe de manoeuvre associé à au moins une roue directrice, un fût traversé par une tige de direction et une fourche associée à la tige de direction et disposée de part et d'autre de la roue directrice, ce système comprenant un moyen de blocage en rotation de la fourche par rapport au fût, de telle sorte que la roue est maintenue dans une position sensiblement parallèle à l'axe principal du jouet, caractérisé en ce qu'il comprend une pièce cylindrique creuse disposée autour du fût et apte à coulisser parallèlement à l'axe principal du fût, entre une position de blocage, où la pièce cylindrique est en contact avec la fourche ou une pièce solidaire de cette fourche ou d'un garde-boue, et une position libre où la pièce cylindrique est éloignée de la fourche ou de la pièce précitée.

Grâce à l'invention, l'utilisation de la pièce cylindrique creuse permet de fixer la roue directrice dans une direction telle qu'elle est sensiblement parallèle aux autres roues du jouet, de telle sorte que celui-ci peut être dirigé facilement par un adulte qui le pousse qu'un enfant conduise avec le guidon ou le volant ou que le jouet soit vide, voire par un jeune enfant apprenant à marcher. On tire parti du fait qu'il suffit d'immobiliser la fourche par rapport au fût pour fixer la direction de la roue directrice. En effet, celle-ci est rigidement supportée par la fourche.

Selon un premier mode de réalisation avantageux de l'invention, le système comprend un manchon apte à coulisser disposé autour du fût et apte à coulisser parallèlement à l'axe principal de celui-ci entre une position de blocage où des pattes du manchon entourent des bras de la fourche et une position de libération où ces pattes sont éloignées des bras de la fourche. Grâce à cet aspect de l'invention, la fourche est immobilisée en rotation par rapport au fût grâce aux pattes du manchon qui coopèrent avec les bras de la fourche. Dans ce cas et selon un autre aspect avantageux de l'invention, le manchon comprend une fente formant deux logements aptes à entourer alternativement un élément solidaire du fût, le logement entourant l'élément solidaire du fût déterminant la position du manchon par rapport au fût. Cet aspect de l'invention permet d'obtenir un positionnement rapide et efficace du manchon par rapport au fût par un coût relativement faible en jouant sur les propriétés d'élasticité du manchon.

Selon un autre mode de réalisation avantageux de l'invention, le système de direction comprend une bague disposée autour du fût et apte à coulisser parallèlement à l'axe principal de celui-ci, cette bague étant solidaire d'une patte s'étendant en direction de la roue directrice et munie d'une encoche apte à coiffer, en fonction de la position de la bague par rapport au fût, un téton solidaire de la fourche ou d'un garde-boue porté par celle-ci.

Selon un autre mode de réalisation avantageux de l'invention, elle concerne un système de direction de jouet pour enfant comprenant un organe de manoeuvre associé à au moins une roue directrice, un fût traversé par une tige de direction et une fourche associée à la tige de direction et disposée de part et d'autre de la roue directrice, ce système comprenant un moyen de blocage en rotation de la fourche par rapport au fût, de telle sorte que la roue est maintenue dans une position sensiblement parallèle à l'axe principal du jouet caractérisé en ce qu'il comprend un étrier articulé sur le fût autour d'un axe perpendiculaire à l'axe principal du fût, l'étrier étant pourvu d'une encoche apte à coiffer un téton solidaire de ladite fourche ou d'un garde-boue porté par ladite fourche dans une position de blocage de la fourche où l'étrier est en contact avec celle-ci, l'encoche étant également apte à être dégagée de ce téton dans une position libre où l'étrier est éloigné de la fourche.

L'invention concerne également un système de direction de jouet pour enfant comprenant un organe de manoeuvre associé à au moins une roue directrice, un fût traversé par une tige de direction et une fourche associée à la tige de direction et disposée de part et d'autre de la roue directrice, ce système comprenant un moyen de blocage en rotation de la fourche par rapport au fût, de telle sorte que la roue est maintenue dans une position sensiblement parallèle à l'axe principal du jouet, caractérisé en ce qu'il comprend un levier en équerre articulé sur un cadre rigide supportant le fût, autour d'un axe perpendiculaire à l'axe principal du fût, le levier étant apte à être déplacé par pivotament autour de l'axe précité entre une position libre où il est distant de la fourche et ne s'oppose pas à ses mouvements et une position de blocage où une première branche du levier est logée entre deux tubes appartenant audit cadre rigide alors qu'une seconde branche est en appui simultané contre les deux bras de la fourche.

L'invention concerne enfin un jouet pour enfant, notamment un tricycle, un tracteur, une voiture à pédales ou un porteur comprenant un système de direction tel que précédemment décrit.

L'invention sera mieux comprise et d'autres avantages de celle-ci apparaîtront plus clairement à la lumière de la description qui va suivre de quatre modes de réalisation d'un système de direction pour tricycle, donnée uniquement à titre d'exemple et faite en référence aux dessins annexés dans lesquels :
- La figure 1 est une représentation de principe en perspective d'un tricycle pour enfant ;
- La figure 2 est une vue en perspective d'un système de direction pour tricycle conforme à un premier mode de réalisation de l'invention, en position libre ;
- La figure 3 est une vue analogue à la figure 2 alors que le système est en position bloquée ;
- La figure 4 est une vue en perspective d'un système de direction pour tricycle conforme à un second mode de réalisation de l'invention en position libre ;
- La figure 5 est une vue analogue à la figure 4 alors que le système est en position bloquée ;
- La figure 6 est une vue en perspective d'un système de direction pour tricycle conforme à un troisième mode de réalisation de l'invention, en position libre ;
- La figure 7 est une vue analogue à la figure 6 alors que le système est en position bloquée ;
- La figure 8 est une vue en perspective d'un système de direction d'un tricycle conforme à un quatrième mode de réalisation de l'invention, en position libre et
- La figure 9 est une vue analogue à la figure 8 alors que le système est en position bloquée.

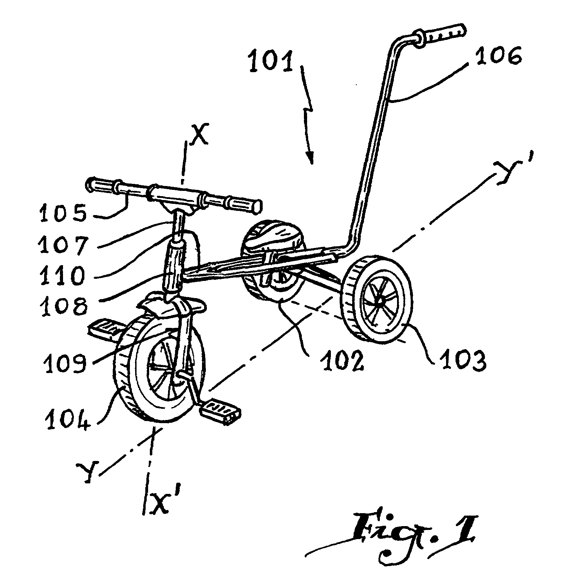

A la figure 1, un tricycle 101 repose sur deux roues arrière 102, 103 et une roue avant 104 directrice. La roue 104 est apte à pivoter autour d'un axe XX' globalement vertical, en étant commandée au moyen d'un guidon 105. Une canne 106 est fixée à l'arrière du cadre du tricycle 101, éventuellement de façon amovible, et permet de pousser le tricycle lorsque l'enfant est fatigué ou lorsque le tricycle doit être déplacé à vide.

Comme il apparaît plus clairement à la figure 2, le guidon 105 est solidaire d'une tige de direction 107 traversant un fût 108 et associée à une fourche 109 dont les deux bras 109a et 109b sont disposés de part et d'autre de la roue directrice 104. Le fût 108 appartient au cadre du tricycle 101 et est solidaire d'une traverse constituée par un tube 110.

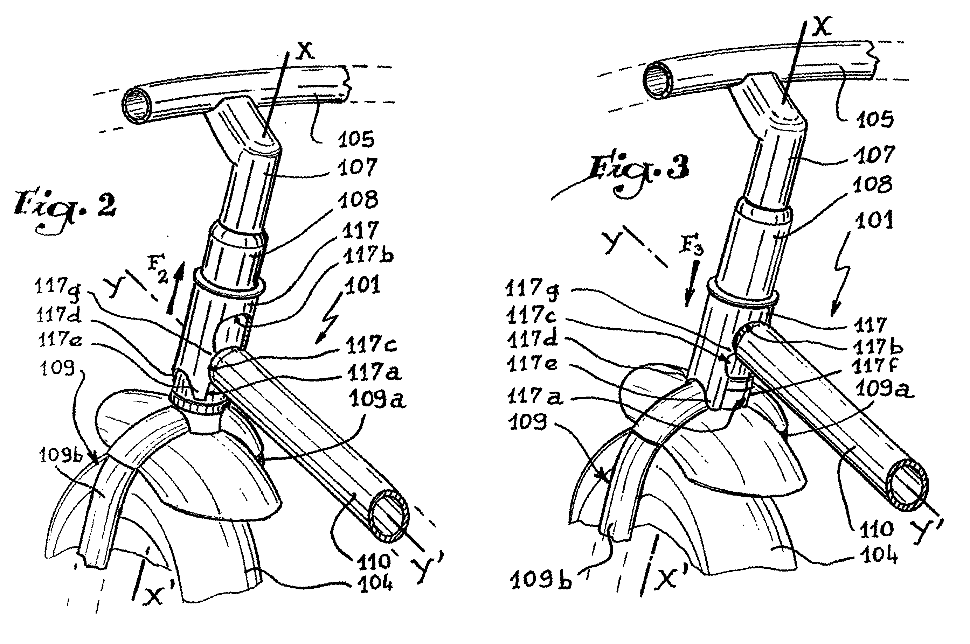

Conformément à l'invention, un manchon 117 est disposé autour du fût 108 et peut coulisser parallèlement à l'axe principal XX' de ce dernier dans le sens des flèches F₂ et F₃ apparaissant respectivement aux figures 2 et 3. Le manchon 117 comprend une fente 117a formant deux logements, référencés respectivement 117b et 117c, de forme globalement circulaire et aptes à entourer le tube 110 de façon à déterminer la position du manchon 117 par rapport au fût 108.

Dans la position libre de la figure 2, le tube 110 est entouré par le logement 117c alors que, dans la position bloquée de la figure 3, le tube 110 est entouré par le logement 117b. On passe de la position libre de la figure 2 à la position bloquée de la figure 3 et réciproquement en jouant sur les propriétés d'élasticité du manchon 117 qui peut avantageusement être réalisé en matière plastique telle que, notamment, en polypropylène ou en polyamide.

Le caractère élastique du manchon 117 et la forme des logements 117b et 117c tendent à repousser le manchon soit vers la position de la figure 2 soit vers celle de la figure 3. En effet, lorsque le manchon 117 est entre ces deux positions, les languettes 117g qui sont définies entre les logements 117b et 117c et dont une seule est visible sur les figures, exercent sur le tube 110 un effort parallèle à la tige 107 de sorte que, par réaction, le manchon 117 est repoussé vers l'une des positions représentées.

Le manchon 117 comprend quatre pattes dont trois 117d, 117e et 117f sont visibles aux figures 2 et 3. Dans la position bloquée de la figure 3, les pattes 117d et 117e entourent le bras 109b de la fourche 109 alors que la patte 117f et la patte associée entourent le bras 109a. Ainsi, la fourche 109 est immobilisée en rotation autour de l'axe XX' de sorte que l'ensemble du dispositif de direction comprenant les éléments 105, 107, 109 et 104 est dans une position bloquée telle que la roue directrice 104 est maintenue sensiblement parallèle à l'axe principal YY' du tricycle 101. Au contraire, dans la position libre de la figure 2, les pattes 117d, 117e et 117f sont éloignées des bras de la fourche 109, de sorte que celle-ci n'est pas entravée dans son mouvement de rotation autour de l'axe XX'.

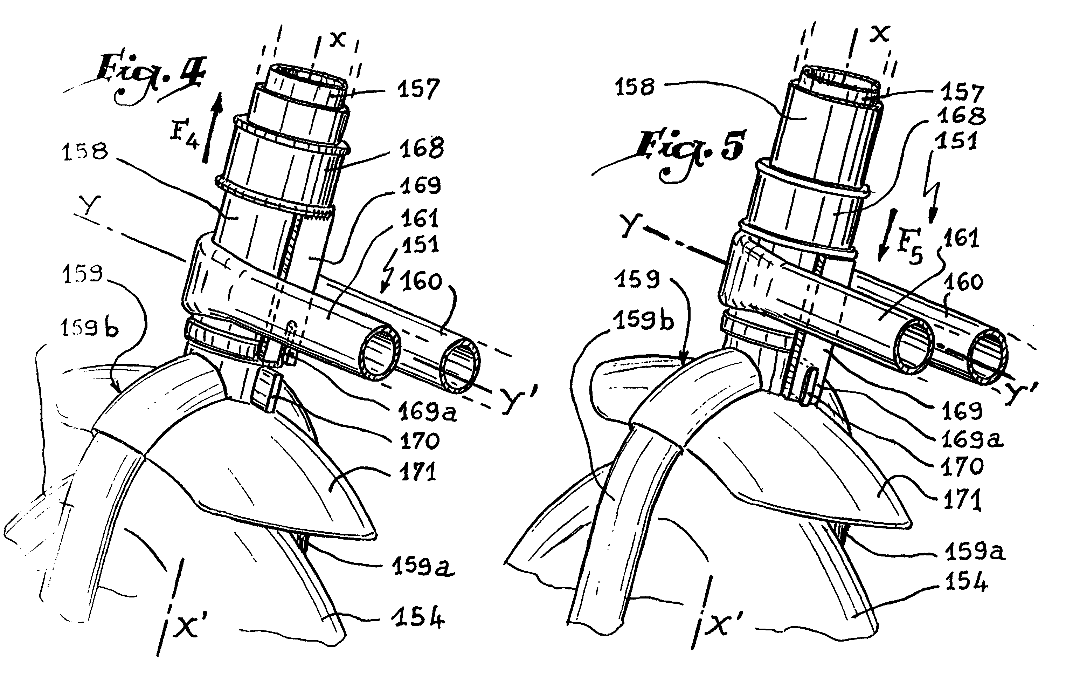

Dans le second mode de réalisation représenté aux figures 4 et 5, les éléments constitutifs analogues à ceux du mode de réalisation des figures 2 et 3 portent des reférences identiques augmentées de 50. Dans ce mode de réalisation, un guidon non représenté est solidaire d'une tige de direction 157 traversant un fût 158 et reliée à une fourche 159 munie de deux bras 159a et 159b. Deux tubes 160 et 161 appartenant à un cadre rigide du tricycle 151 sont fixés par rapport au fût 158.

Une bague 168 est montée autour du fût 158 de façon à être apte à coulisser parallèlement à l'axe principal XX' du fût 158. Cette bague porte une patte 169 munie d'une encoche 169a orientée vers la roue 154. La bague 168 et la patte 169 sont réalisées en une seule pièce par injection ou rendues solidaires l'une de l'autre par tout moyen approprié et, notamment, par collage ou par soudage. La bague 168 est mobile entre deux positions, libre (figure 4) et bloquée (figure 5), et peut être immobilisée dans sa position libre de la figure 4 grâce au montage serré de la bague 168 sur le fût 158. La bague 168 est déplacée sur le fût 158 grâce à un effort dirigé dans la sens de la flèche F₄ à la figure 4.

Un téton 170 est solidaire de la fourche 169 et disposé à proximité immédiate du fût 158. Lorsque la roue 154 est sensiblement parallèle à l'axe principal YY' du tricycle, l'encoche 169a peut coiffer le téton 170 en étant amenée dans la position bloquée de la figure 5, grâce à un effort F₅ dirigé vers la roue 154. Dans cette position, la patte 169 empêche les mouvements de rotation du téton 170 autour de l'axe XX' et immobilise ainsi la fourche 169 en rotation, de sorte que la roue 154 demeure parallèle à l'axe YY'.

Selon une variante non représentée de l'invention, le téton 170 pourrait aussi être solidaire d'un garde-boue 171 porté par la fourche 169. Le fonctionnement serait sensiblement identique à celui qui vient d'être décrit.

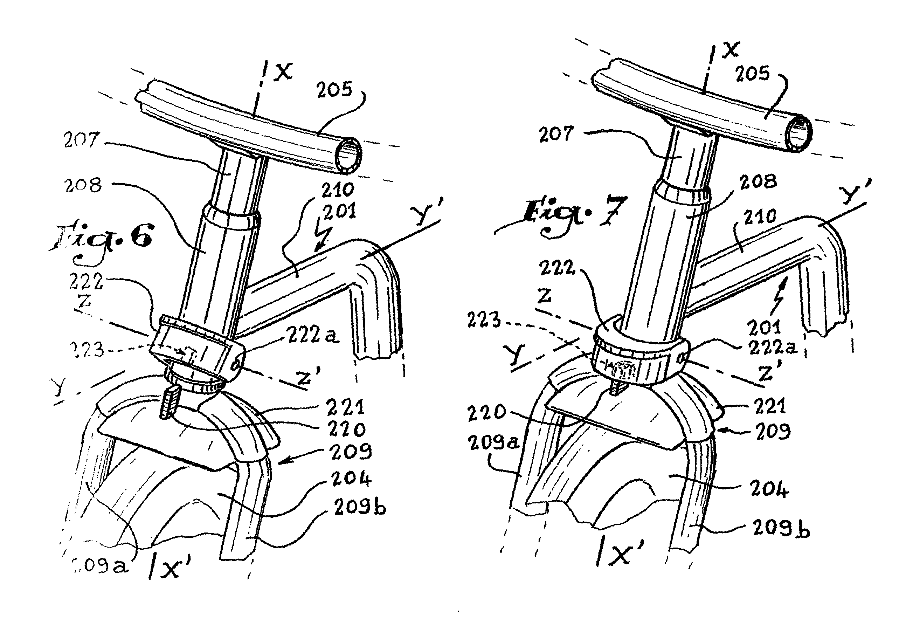

Dans le troisième mode de réalisation de l'invention représenté aux figures 6 et 7, les éléments analogues à ceux du mode de réalisation des figures 2 et 3 portent des références identiques augmentées de 100. Dans ce mode de réalisation, un guidon 205 solidaire d'une tige de direction 207 traverse un fût 208 relié à une fourche 209 dont les bras 209a et 209b entourent une roue directrice 204. Un tube 210 est fixé par rapport au fût 208 qu'il supporte. Un étrier 222 est articulé par rapport au fût 208 autour d'un pivot 222a disposé selon un axe référencé ZZ' globalement perpendiculaire à l'axe principal XX' du fût 208. Cet étrier est pourvu d'une encoche 223 apte à coiffer, en fonction de sa position par rapport au fût 208, un téton 220 solidaire de la fourche 209. Lorsque l'encoche 223 de l'étrier 222 coiffe le téton 220 comme représenté à la figure 7, la fourche 209 est immobilisée en rotation autour de l'axe XX', de sorte que la roue 204 est maintenue sensiblement parallèle à l'axe principal YY' du tricycle 201. Comme précédemment, le téton 220 pourrait être solidaire d'un garde-boue 221 porté par la fourche 209.

Dans les second et troisième modes de réalisation représentés aux figures 4 à 7, les tétons 170 et 220 ont été représentés soit sur la face arrière de la fourche 159, soit sur la face avant de la fourche 209. Il est bien entendu qu'en modifiant l'orientation de la patte 169 ou de l'étrier 222, il serait aussi possible de prévoir que le téton 170 soit orienté vers l'avant comme le téton 220 ou que le téton 220 soit orienté vers l'arrière comme le téton 170.

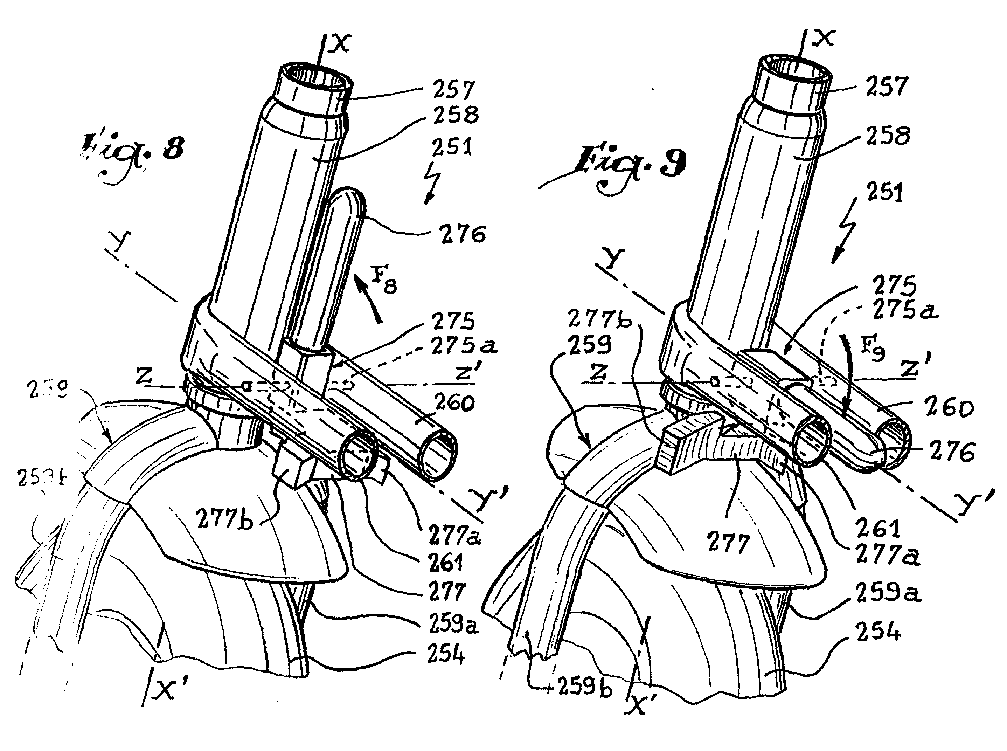

Dans le quatrième mode de réalisation d'un système de direction suivant l'invention, représenté aux figures 8 et 9, les éléments analogues à ceux du mode de réalisation des figures 2 et 3 portent des références identiques augmentées de 150. Dans ce mode de réalisation, une tige de direction 257 solidaire d'un guidon non représenté traverse un fût 258 et est reliée à une fourche 259 dont les deux bras 259a et 259b entourent une roue directrice 254. Un levier en équerre 275 est articulé par rapport aux tubes 260 et 261 d'un cadre rigide autour d'un pivot 275a disposé selon un axe ZZ' perpendiculaire à l'axe principal XX' du fût 258. Ce levier 275 comprend une première branche 276 formant poignée qui, dans la position libre de la figure 8, est sensiblement parallèle au fût 258. La seconde branche 277 du levier 275 comprend deux extensions latérales 277a et 277b, de sorte qu'elle forme une fourche.

Le levier 275 est mobile entre la position libre de la figure 8 dans laquelle il est distant de la fourche 259 et qu'il atteint grâce à un effort F₈ dirigé vers le levier 258 et la position bloquée représentée à la figure 9 et atteinte grâce à un effort F₉, dans laquelle sa seconde branche 277 est en appui simultané contre les deux bras 259a et 259b de la fourche 259 grâce aux extensions latérales 277a et 277b. De ce fait, la fourche 259 est immobilisée en rotation par rapport à l'axe XX' de sorte que la roue est maintenue parallèle à l'axe principal YY' du tricycle 251.

Dans la position libre de la figure 8, la poignée 276 jouxte le fût 258, de sorte qu'elle ne constitue pas une partie proéminente potentiellement dangereuse pour un utilisateur. Dans la position bloquée de la figure 9, la poignée 276 est logée entre les deux tubes 260 et 261, de sorte qu'elle ne risque pas de blesser un enfant qui sauterait brusquement de la selle du tricycle vers l'avant. Le fait que la branche ou poignée 276 est logée entre les tubes 260 et 261 permet aussi de soulager le pivot 275a en cas d'effort violent exercé sur la roue 254 qui aurait tendance à faire pivoter la roue 254 autour de l'axe XX'. En effet, les tubes 260 et 261 peuvent absorber un effort de rotation autour de l'axe XX' transmis par la poignée 276 grâce au jeu de l'articulation du levier 275 autour de l'axe ZZ'.

Le levier 275 peut être immobilisé dans sa position relevée de la figure 8 par tout moyen approprié. Par exemple, le pivot 275a peut être monté serré dans le corps du levier et dans les orifices correspondants des tubes 260 et 261.

L'invention a été représentée lors de sa mise en oeuvre dans le système de direction d'un tricycle, mais elle est aussi applicable à d'autres types de jouets pour enfant comprenant un système de direction et, notamment, à un tracteur, à une voiture à pédales, à un porteur ou pousseur, avec ou sans pédales, destinés à être chevauché par un jeune enfant. L'invention concerne donc ces jouets dans la mesure où ils comprennent un système de direction tel que précédemment décrit.

## Revendications

1. Système de direction de jouet pour enfant comprenant un organe de manoeuvre (5, 55, 105) associé à au moins une roue directrice (4, 54, 104), un fût (108, 158) traversé par une tige de direction (107, 157) et une fourche (109, 159) associée à ladite tige de direction et disposée de part et d'autre de ladite roue directrice (4, 104; 154), ledit système comprenant un moyen de blocage en rotation de ladite fourche par rapport audit fût, de telle sorte que ladite roue est maintenue dans une position sensiblement parallèle à l'axe principal (YY') dudit jouet, **caractérisé en ce qu'**il comprend une pièce cylindrique creuse (117, 168) disposée autour dudit fût (108, 158) et apte à coulisser parallèlement à l'axe principal (XX') dudit fût, entre une position de blocage, où ladite pièce cylindrique est en contact avec ladite fourche (109, 159) et/ou une pièce (170) solidaire de ladite fourche (159) ou d'un garde-boue (171), et une position libre, où ladite pièce cylindrique est éloignée de ladite fourche et/ou de ladite pièce.

2. Sytème de direction selon la revendication 1, **caractérisé en ce que** ladite pièce cylindrique est un manchon (117) disposé autour dudit fût (108) et apte à coulisser entre une position bloquée où des pattes (117d, 117e, 117f) dudit manchon entourent des bras (109a, 109b) de ladite fourche et une position libre où lesdites pattes sont éloignées desdits bras de ladite fourche.

3. Système de direction selon la revendication 2 **caractérisé en ce que** ledit manchon (117) comprend une fente (117a) formant deux logement (117b, 117c) aptes à entourer alternativement un élément (110) solidaire dudit fût (108), lesdits logements entourant ledit élément solidaire dudit fût déterminant la position dudit manchon par rapport audit fût.

4. Système de direction selon la revendication 3, **caractérisé en ce que** ledit manchon (117) est élastique et la forme desdits logements (117b, 117c) est telle que ledit manchon est repoussé soit vers ladite position de blocage soit vers ladite position libre.

5. Système de direction selon la revendication 1, **caractérisé en ce que** ladite pièce cylindrique creuse est une bague (168) disposée autour dudit fût (158), et apte à coulisser parallèlement à l'axe principale (XX') dudit fût, ladite bague étant solidaire d'une patte (169) s'étendant en direction de ladite roue directrice (154) et munie d'une encoche (169a) apte à coiffer, en fonction de la position de ladite bague par rapport audit fût, un téton (170) solidaire de ladite fourche (159) ou d'un garde-boue (171) porté par ladite fourche.

6. Système de direction de jouet pour enfant comprenant un organe de manoeuvre (5, 205) associé à au moins une roue directrice (4, 154, 204), un fût (208) traversé par une tige de direction (207) et une fourche (209) associée à ladite tige de direction et disposée de part et d'autre de ladite roue directrice (4, 204), ledit système comprenant un moyen de blocage en rotation de ladite fourche par rapport audit fût, de telle sorte que ladite roue est maintenue dans une position sensiblement parallèle à l'axe principal (YY') dudit jouet, **caractérisé en ce qu'**il comprend un étrier (222) articulé sur ledit fût, autour d'un axe (ZZ') perpendiculaire à l'axe principal (XX') dudit fût (208), ledit étrier étant pourvu d'une encoche (223) apte à coiffer un téton (220) solidaire de ladite fourche (209) ou d'un garde-boue (221) porté par ladite fourche dans une position de blocage de ladite fourche où ledit étrier est en contact avec ladite fourche, ladite encoche étant apte à être dégagée dudit téton dans une position libre où ledit étrier est éloigné de ladite fourche.

7. Système de direction de jouet pour enfant comprenant un organe de manoeuvre (5, 255) associé à au moins une roue directrice (4, 254), un fût (258) traversé par une tige de direction (257) et une fourche (259) associée à ladite tige de direction et disposée de part et d'autre de ladite roue directrice (254), ledit système comprenant un moyen de blocage en rotation de ladite fourche par rapport audit fût, de telle sorte que ladite roue est maintenue dans une position sensiblement parallèle à l'axe principal (YY') dudit jouet, **caractérisé en ce qu'**il comprend un levier (275) en équerre articulé sur un cadre rigide (260, 261) supportant ledit fût, autour d'un axe (ZZ') perpendiculaire à l'axe principal dudit fût (258) ledit levier étant apte à être déplacé par pivotement autour dudit axe entre une position libre où il est distant de ladite fourche (259) et ne s'oppose pas à ses mouvements et une position de blocage où une première branche (276) dudit levier est logée entre deux tubes (260, 261) appartenant audit cadre rigide alors qu'une seconde branche (277) est en appui simultané contre les deux bras (259a, 259b) de ladite fourche.

8. Système de direction selon la revendication 7, **caractérisé en ce que** ladite première branche est une poignée (276) de manoeuvre dudit levier en équerre, ladite poignée jouxtant ledit fût (258) dans la position dans laquelle ledit levier ne s'oppose pas aux mouvements de ladite fourche.

9. Système selon l'une des revendications 7 ou 8, **caractérisé en ce que** dans ladite position libre dudit levier (275), ladite poignée (276) jouxte ledit fût (258).

10. Jouet pour enfant, notamment tricycle, tracteur, voiture à pédales ou porteur, comprenant un système de direction selon l'une des revendications précédentes.

## Patentansprüche

1. Lenksystem für ein Kinderspielzeug, umfassend ein Betätigungselement (5, 55, 105), das mit mindestens einem Vorderrad (4, 54, 104) verbunden ist, einen Schaft (108, 158), durch den hindurch eine Lenkstange (107, 157) verläuft, und eine Gabel (109, 159), die mit der Lenkstange verbunden und beiderseits des Vorderrades (4, 104, 154) angeordnet ist, wobei dieses System ein Mittel zur Drehfeststellung der Gabel in bezug auf den Schaft umfasst, so dass das Rad in einer im wesentlichen zu der Hauptachse (YY') des Spielzeugs parallelen Position gehalten wird, **dadurch gekennzeichnet, dass** es ein hohles zylindrisches Stück (117, 168) umfasst, das um den Schaft (108, 158) angeordnet und in der Lage ist, parallel zur der Hauptachse (XX') des Schaftes zu gleiten, zwischen einer Feststellposition, in der das zylindrische Stück mit der Gabel (109, 159) oder einem mit dieser Gabel (159) oder einem Kotflügel (171) verbundenen Stück (170) in Kontakt ist, und einer freien Position, in der das zylindrische Stück von der Gabel und/oder dem vorgenannten Stück entfernt ist.

2. Lenksystem nach Anspruch 1, **dadurch gekennzeichnet, dass** das zylindrische Stück eine Hülse (117) ist, die um den Schaft (108) angeordnet und in der Lage ist sich verschieben zu lassen, zwischen einer Feststellposition, wo Klauen (117d, 117e, 117f) der Hülse die Arme (109a, 109b) der Gabel umgreifen, und einer Freigabeposition, in der diese Klauen von den Armen der Gabel entfernt sind.

3. Lenksystem nach Anspruch 2, **dadurch gekennzeichnet, dass** die Hülse (117) einen Schlitz (117a) umfasst, der zwei Stellungen (117b, 117c) einnimmt, die in der Lage sind, alternativ ein mit dem Schaft (108) verbundenes Element (110) zu umgeben. wobei die Stellungen, die das mit dem Schaft verbundene Element umgeben. die Position der Hülse in bezug auf den Schaft bestimmen.

4. Lenksystem nach Anspruch 3, **dadurch gekennzeichnet, dass** die Hülse (117) elastisch ist und die Art der Stellungen (117b, 117c) derart ist, dass die Hülse entweder in ihre Feststellposition oder in die freie Position zurückgeschoben wird.

5. Lenksystem nach Anspruch 1, **dadurch gekennzeichnet, dass** das zylindrische Stück ein Ring (168) ist, der um den Schaft (158) angeordnet und in der Lage ist, parallel zur Hauptachse (XX') des Schaftes zu gleiten, wobei dieser Ring mit einer Klaue (169) verbunden ist, das sich in Richtung des Vorderrades (154) erstreckt und mit einer Vertiefung (169a) versehen ist, die in Abhängigkeit von der Position des Ringes in bezug auf den Schaft einen Zapfen (170) übergreifen kann, der mit der Gabel (159) oder einem Kotflügel (171), der von der Gabel getragen wird, fest verbunden ist.

6. Lenksystem für ein Kinderspielzeug, umfassend ein Betätigungselement (5, 205). das mit mindestens einem Vorderrad (4, 154, 204) verbunden ist, einen Schaft (208), durch den hindurch eine Lenkstange (207) verläuft, und eine Gabel (209), die mit der Lenkstange fest verbunden und beiderseits des Vorderrades (4, 204) angeordnet ist, wobei dieses System ein Mittel zur Drehfeststellung der Gabel in bezug auf den Schaft umfasst, so dass das Rad in einer Position im wesentlichen parallel zur Hauptachse (YY') des Spielzeugs gehalten wird, **dadurch gekennzeichnet, dass** es einen Bügel (222) umfasst, der auf dem Schaft um eine Achse (ZZ') senkrecht auf die Hauptachse (XX') des Schaftes (208) gelenkig montiert ist, wobei der Bügel mit einer Vertiefung (223) versehen ist, die einen mit der Gabel (209) oder einem von der Gabel getragenen Kotflügel (221) verbundenen Zapfen in einer Feststellposition der Gabel übergreifen kann, in der der Bügel mit dieser in Kontakt steht, wobei die Vertiefung auch in der Lage ist, sich von diesem Zapfen in einer freien Position zu lösen, in der der Bügel von der Gabel entfernt ist.

7. Lenksystem für ein Kinderspielzeug, umfassend ein Betätigungselement (5, 255), das mit mindestens einem Vorderrad (4, 254) verbunden ist, einen Schaft (258), durch den hindurch eine Lenkstange (257) verläuft, und eine Gabel (259), die mit der Lenkstange verbunden und beiderseits des Vorderrades (254) angeordnet ist, wobei dieses System ein Mittel zur Drehfeststellung der Gabel in bezug auf den Schaft umfasst, so dass das Rad in einer im wesentlichen zu der Hauptachse (YY') des Spielzeugs parallelen Position gehalten wird, **dadurch gekennzeichnet, dass** es einen Winkelhebel (275) umfasst, der auf einem starren Rahmen (260, 261), der den Schaft trägt, um eine Achse (ZZ') senkrecht auf die Hauptachse des Schaftes (258) gelenkig montiert ist. wobei der Hebel in der Lage ist, durch Schwenken um die vorgenannte Achse zwischen einer freien Position, in der er von der Gabel (259) entfernt ist und sich ihren Bewegungen nicht entgegenstellt. und einer Feststellposition, in der ein erster Abschnitt (276) des Hebels zwischen zwei Rohren (260, 261) angeordnet ist, die dem starren Rahmen angehören, während ein zweiter Abschnitt (277) gleichzeitig an den beiden Armen (259a, 259b) der Gabel anliegt.

8. Lenksystem nach Anspruch 7, **dadurch gekennzeichnet, dass** der erste Abschnitt ein Griff (276) zur Betätigung des Winkelhebels ist, wobei der Griff an dem Schaft (258) in der Position anliegt, in der sich der Hebel nicht den Bewegungen der Gabel entgegenstellt.

9. System nach einem der Ansprüche 7 oder 8, **dadurch gekennzeichnet. dass** in der freien Position des Hebels (275) der Griff (276) an dem Schaft (258) anliegt.

10. Kinderspielzeug, insbesondere ein Dreirad, ein Traktor, ein Tretauto oder ein Tragefahrzeug, die ein Lenksystem nach einem der vorhergehenden Ansprüche umfassen.

## Claims

1. Steering system for a child's toy, comprising an operating member (5, 55, 105) associated with at least one steered wheel (4, 54, 104), a barrel (108, 158) through which a steering rod (107, 157) passes and a fork (109, 159) associated with the said steering rod and arranged on each side of the said steered wheel (4, 104, 154), the said system comprising a means for preventing the said fork from rotating with respect to the said barrel, in such a way that the said wheel is held in a position essentially parallel to the main axis (YY') of the said toy, **characterized in that** it comprises a hollow cylindrical part (117, 168) arranged around the said barrel (108, 158) and capable of sliding parallel to the main axis (XX') of the said barrel between an immobilizing position in which the said cylindrical part is in contact with the said fork (109, 159) and/or a part (170) secured to the said fork (159) or a mudguard (171), and a free position in which the said cylindrical part is away from the said fork and/or the said part.

2. Steering system according to Claim 1, **characterized in that** the said cylindrical part is a sleeve (117) arranged around the said barrel (108) and capable of sliding between an immobilized position in which tabs (117d, 117e, 117f) of the said sleeve surround arms (109a, 109b) of the said fork, and a free position in which the said tabs are away from the said arms of the said fork.

3. Steering system according to Claim 2, **characterized in that** the said sleeve (117) comprises a slot (117a) forming two housings (117b, 117c) capable alternately of surrounding an element (110) secured to the said barrel (108), the said housings surrounding the said element secured to the said barrel determining the position of the said sleeve with respect to the said barrel.

4. Steering system according to Claim 3, **characterized in that** the said sleeve (117) is elastic and the shape of the said housings (117b, 117c) is such that the said sleeve is pushed back either towards the said immobilizing position or towards the said free position.

5. Steering system according to Claim 1, **characterized in that** the said hollow cylindrical part is a ring (168) arranged around the said barrel (158) and capable of sliding parallel to the main axis (XX') of the said barrel, the said ring being secured to a tab (169) extending towards the said steered wheel (154) and equipped with a cutout (169a) capable, depending on the position of the said ring with respect to the said barrel, of fitting over a stud (170) secured to the said fork (159) or to a mudguard (171) carried by the said fork.

6. Steering system for a child's toy, comprising an operating member (5, 205) associated with at least one steered wheel (4, 154, 204), a barrel (208) through which a steering rod (207) passes and a fork (209) associated with the said steering rod and arranged on each side of the said steered wheel (4, 204), the said system comprising a means for preventing the said fork from rotating with respect to the said barrel, in such a way that the said wheel is held in a position essentially parallel to the main axis (YY') of the said toy, **characterized in that** it comprises a yoke (222) articulated to the said barrel about an axis (ZZ') perpendicular to the main axis (XX') of the said barrel (208), the said yoke being equipped with a cutout (223) capable of fitting over a stud (220) secured to the said fork (209) or to a mudguard (221) carried by the said fork in a position for immobilizing the said fork in which the said yoke is in contact with the said fork, the said cutout being capable of being disengaged from the said stud in a free position in which the said yoke is away from the said fork.

7. Steering system for a child's toy, comprising an operating member (5, 255) associated with at least one steered wheel (4, 254), a barrel (258) through which a steering rod (257) passes and a fork (259) associated with the said steering rod and arranged on each side of the said steered wheel (254), the said system comprising a means for preventing the said fork from rotating with respect to the said barrel, in such a way that the said wheel is held in a position essentially parallel to the main axis (YY') of the said toy, **characterized in that** it comprises a bracket-shaped lever (275) articulated to a rigid frame (260, 261) supporting the said barrel, about an axis (ZZ') perpendicular to the main axis of the said barrel (258), the said lever being able to be moved in pivoting about the said axis between a free position in which it is away from the said fork (259) and does not oppose the movements of the latter, and an immobilizing position in which a first branch (276) of the said lever is lodged between two tubes (260, 261) belonging to the said rigid frame while a second branch (277) simultaneously rests against the two arms (259a, 259b) of the said fork.

8. Steering system according to Claim 7, **characterized in that** the said first branch is a handle (276) for operating the said bracket-shaped lever, the said handle lying alongside the said barrel (258) in the position in which the said lever does not oppose the movements of the said fork.

9. System according to one of Claims 7 and 8, **characterized in that** when the said lever (275) is in the said free position, the said handle (276) lies alongside the said barrel (258).

10. Child's toy, particularly a tricycle, tractor, pedal car or other ride-on toy, comprising a steering system according to one of the preceding claims.
